# EUROPÄISCHE PATENTSCHRIFT

(11) **EP 0 786 884 B1**
(45) Veröffentlichungstag und Bekanntmachung des Hinweises auf die Patenterteilung: **30.05.2007**
(21) Anmeldenummer: 96117719.3
(22) Anmeldetag: 06.11.1996
(51) Int. Cl.: H04L 12/28, H04L 29/02

(54) **Verfahren zur Übertragung von Kennungen nach Anschluss eines elektrischen Gerätes an eine Busleitung**
Method of transmitting identification signals after connecting an electrical device to a bus line
Procédé de transmission de signaux d'identification après connexion d'un appareil électrique à un bus

(30) Priorität: 25.01.1996 DE 19602596
(43) Veröffentlichungstag der Anmeldung: 30.07.1997
(73) Patentinhaber: ROBERT BOSCH GMBH, 70442 Stuttgart (DE)
(72) Erfinder: Klingenberg, Wolfgang, 31246 Lahstedt (DE)

(56) Entgegenhaltungen:
- EP-A- 0 675 626
- HAPPACHER M: "DAS VERNETZTE EIGENHEIM" ELEKTRONIK, FRANZIS VERLAG GMBH. MUNCHEN, DE, Bd. 44, Nr. 18, 5. September 1995 (1995-09-05), Seiten 50-54,56,58, XP000529579 ISSN: 0013-5658

## Beschreibung

### Stand der Technik

Die Erfindung geht von einem Verfahren zur Übertragung von Kennungen nach Anschluß eines elektrischen Gerätes an eine Busleitung nach der Gattung des Hauptanspruchs aus.

Aus der "Elektronik 18/1995", Seite 50-58, sind bereits Hausgeräte bekannt, die an eine Busleitung angeschlossen sind. Die Ankopplung der Hausgeräte an die Busleitung erfolgt über sogenannte Multifunktionsmodule. Das zentrale Element eines solches Heimelektroniksystems ist ein Multimedia-PC mit Touch-Screen-Monitor als Bedieneinheit.

Die EP 0 675 626 A1 offenbart ein Sicherheitssystem für elektrisch betriebene Geräte, wie Videorekorder und Fernsehgeräte.

### Vorteile der Erfindung

Das erfindungsgemäße Verfahren mit den Merkmalen des unabhängigen Anspruchs 1 hat demgegenüber den Vorteil, daß beim Anschluß weiterer elektrischer Geräte an die Busleitung der Zentrale die Funktion dieser Geräte mitgeteilt wird, damit sie gemäß ihrer Aufgabe eingesetzt werden können.

Vorteilhaft ist auch, daß die Identifizierung eines neu an die Busleitung angeschlossenen elektrischen Gerätes durch die Zentrale automatisch erfolgt und die entsprechenden

Informationen direkt von einer Datenverarbeitungseinrichtung, beispielsweise beim Kundendienst, abrufbar sind. Auf diese Weise wird die Versorgung solcher Zentralen mit entsprechenden Betriebsdaten der elektrischen Geräte beim Kundendienst zentralisiert, so daß bei den Zentralen und den elektrischen Geräten selbst kein erhöhter Aufwand und damit keine erhöhten Kosten erforderlich sind.

Durch die in den Unteransprüchen 2 bis 5 aufgeführten Maßnahmen sind vorteilhafte Weiterbildungen und Verbesserungen des im unabhängigen Anspruch 1 angegebenen Verfahrens möglich.

Vorteilhaft gemäß Anspruch 2 ist die durch Typen- und Seriennummer des elektrischen Gerätes gebildete Kennung, die in einem Datenspeicher des elektrischen Gerätes abgespeichert ist und an die Datenverarbeitungseinrichtung übertragen wird. Dadurch wird eine einfache Identifizierung des elektrischen Gerätes bei kleinstmöglichem Aufwand an Speicherplatz im elektrischen Gerät ermöglicht.

Vorteilhaft gemäß Anspruch 3 ist die Speicherung der Telefonnummer der Datenverarbeitungseinrichtung im Datenspeicher des elektrischen Gerätes. Dadurch wird eine einfache Identifizierung der zuständigen Datenverarbeitungseinrichtung durch die Zentrale, die die Datenverarbeitungseinrichtung anwählt, erreicht und nur eine unwesentliche Erweiterung des Datenspeichers des elektrischen Gerätes erforderlich.

Vorteilhaft gemäß Anspruch 4 ist die Verwendung einer Bedieneinheit zur Anwahl der Datenverarbeitungseinrichtung. Dadurch läßt sich die Identifikation des elektrischen Gerätes durch die Zentrale vom Benutzer kontrollieren.

Vorteilhaft gemäß Anspruch 5 ist die Übertragung von geänderten Betriebsdaten von der Datenverarbeitungseinrichtung über das Fernsprechnetz an die Zentrale. Dadurch wird eine automatische Anpassung der Gerätekonfiguration an die geänderten Betriebsdaten in der Zentrale ermöglicht.

Durch die Datenverarbeitungseinrichtung gemäß dem unabhängigen Anspruch 6 und das elektrische Gerät gemäß dem unabhängigen Anspruch 7 sind vorteilhafte Vorrichtungen zur Durchführung des erfindungsgemäßen Verfahrens gegeben.

Vorteilhaft nach Anspruch 6 ist der einfache und wenig aufwendige Aufbau der Datenverarbeitungseinrichtung, die lediglich eine Empfangseinheit, eine Sendeeinheit, eine Auswerteeinheit und eine Zugangssteuerung für das Fernsprechnetz aufweist und gegebenenfalls in einem bereits vorhandenen Rechner integriert sein kann und wenig Platz benötigt.

Vorteilhaft nach Anspruch 7 ist der Datenspeicher des elektrischen Gerätes, der die Speicherung von Kenndaten ermöglicht.

Durch die in den Unteransprüchen 8 und 9 aufgeführten Maßnahmen sind vorteilhafte Weiterbildungen und Verbesserungen des im unabhängigen Anspruch 7 angegebenen elektrischen Gerätes möglich.

Besonders vorteilhaft nach Anspruch 8 und Anspruch 9 ist der Datenspeicher des elektrischen Gerätes zur Speicherung der Typen- und Seriennummer des elektrischen Gerätes sowie der Telefonnummer der Datenverarbeitungseinrichtung. Aufgrund der wenigen in diesem Datenspeicher enthaltenen Daten ist nur ein Speicher mit geringer Speicherkapazität und damit mit geringem Platzaufwand erforderlich.

### Zeichnung

Ein Ausführungsbeispiel der Erfindung ist in der Zeichnung dargestellt und in der nachfolgenden Beschreibung näher erläutert. Es zeigen Figur 1 ein System zur Übertragung von Kennungen und Betriebsdaten zwischen einem elektrischen Gerät und einer Datenverarbeitungseinrichtung, Figur 2 eine Datenverarbeitungseinrichtung, Figur 3 eine Zentrale, Figur 4 ein alternatives Übertragungssystem, Figur 5 einen Ablaufplan für den Empfang von Kennungen und die Aussendung von Betriebsdaten durch die Datenverarbeitungseinrichtung, Figur 6 einen Ablaufplan für die Steuerung der Übertragung einer Kennung an die Datenverarbeitungseinrichtung durch die Zentrale und Figur 7 einen Ablaufplan für die Steuerung des Empfangs von Betriebsdaten von der Datenverarbeitungseinrichtung durch die Zentrale.

### Beschreibung des Ausführungsbeispiels

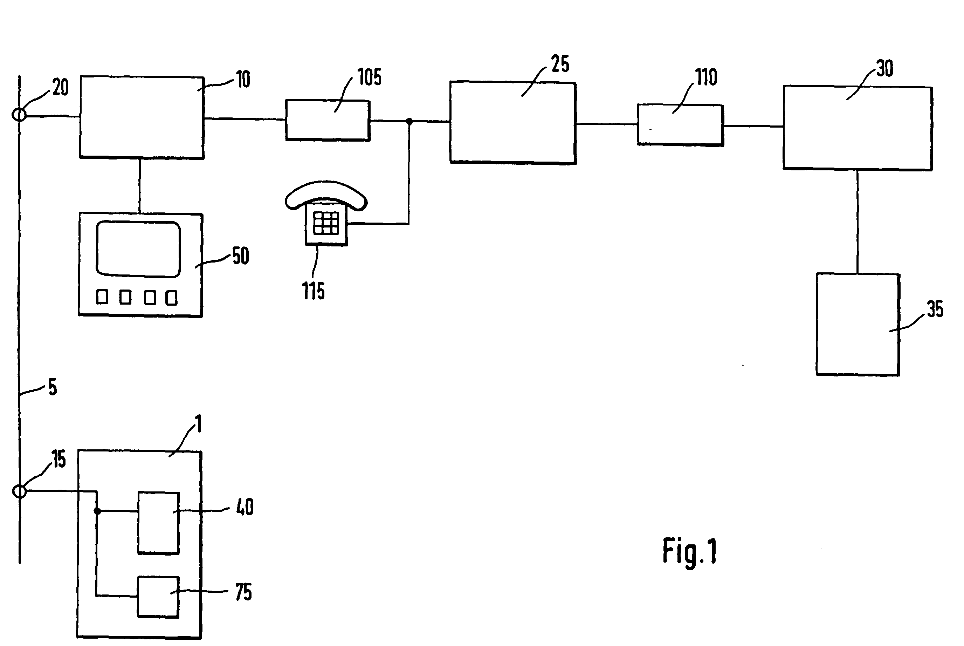

In Figur 1 kennzeichnet 1 ein elektrisches Gerät, das einen Datenspeicher 40 und eine Buslogik 75 aufweist. Der Datenspeicher 40 und die Buslogik 75 sind miteinander verbunden und über einen ersten Buskoppler 15 an eine Busleitung 5 angeschlossen. Über einen zweiten Buskoppler 20 ist eine Zentrale 10 ebenfalls an die Busleitung 5 angeschlossen. Mit der Zentrale 10 ist eine Bedieneinheit 50 verbunden. Ein Fernsprechnetz 25 verbindet die Zentrale 10 mit einer Datenverarbeitungseinrichtung 30. Dabei ist die Zentrale 10 über ein erstes Modem 105 und die Datenverarbeitungseinrichtung 30 über ein zweites Modem 110 an das Fernsprechnetz 25 angeschlossen. Mit der Datenverarbeitungseinrichtung 30 ist eine Datenbank 35 verbunden. Die Busleitung 5 ermöglicht eine Vernetzung mehrerer elektrischer Geräte, die jeweils über einen Buskoppler an die Busleitung 5 angeschlossen sind. Auf diese Weise können elektrische Geräte innerhalb beispielsweise eines Hauses miteinander vernetzt und durch mindestens eine Zentrale 10 gesteuert werden. Zum Anschluß der Zentrale 10 an das Fernsprechnetz 25 kann ein bereits vorhandener Fernsprechanschluß genutzt werden, an den auch bereits ein Fernsprechapparat 115 angeschlossen sein kann. Alle Teilnehmer an dem durch die Busleitung 5 repräsentierten Haus-Bus, die neben den elektrischen Geräten, wie Heizung, Waschmaschine, Fernseher oder dergleichen, auch als Schalter, Sensoren, Stellglieder und Aktoren ausgeführt sein können, haben eine eindeutige Adresse, durch die sie beispielsweise zum Austausch von Datentelegrammen angesprochen werden können. Die Steuerung der Teilnehmer erfolgt über die Zentrale 10, die vom Benutzer über die Bedieneinheit 50 empfangene Steuerbefehle verarbeitet.

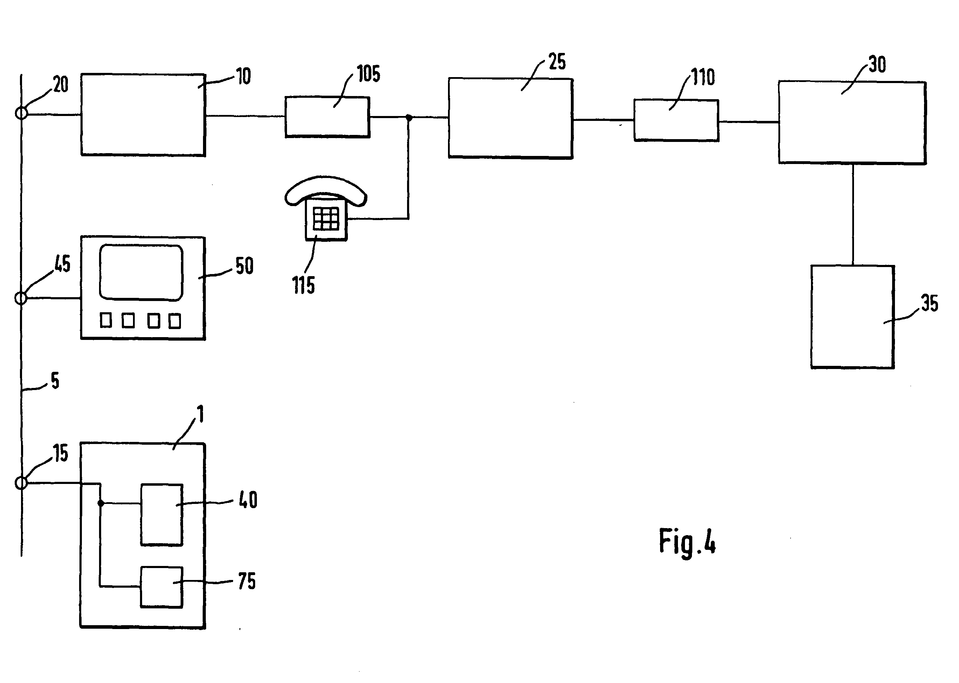

In einer weiteren Realisierungsform gemäß Figur 4 ist auch der Anschluß der Bedieneinheit 50 über einen dritten Buskoppler 45 an die Busleitung 5 denkbar, so daß auch die Bedieneinheit 50 zum Teilnehmer am Haus-Bus wird.

Die Verwendung des ersten Modems 105 und des zweiten Modems 110 zum Anschluß der Zentrale 10 bzw. der Datenverarbeitungseinrichtung 30 an das Fernsprechnetz 25 ist nur dann erforderlich, wenn das Fernsprechnetz analog ist. Bei digitalen Fernsprechnetzen, beispielsweise mit Diensteintegration nach dem ISDN-Standard, kann auf die Modems 105 und 110 verzichtet werden, unter Verwendung entsprechender Schnittstellen, wie beispielsweise der S₀-Basisanschlußschnittstelle zum Anschluß an das Fernsprechnetz 25.

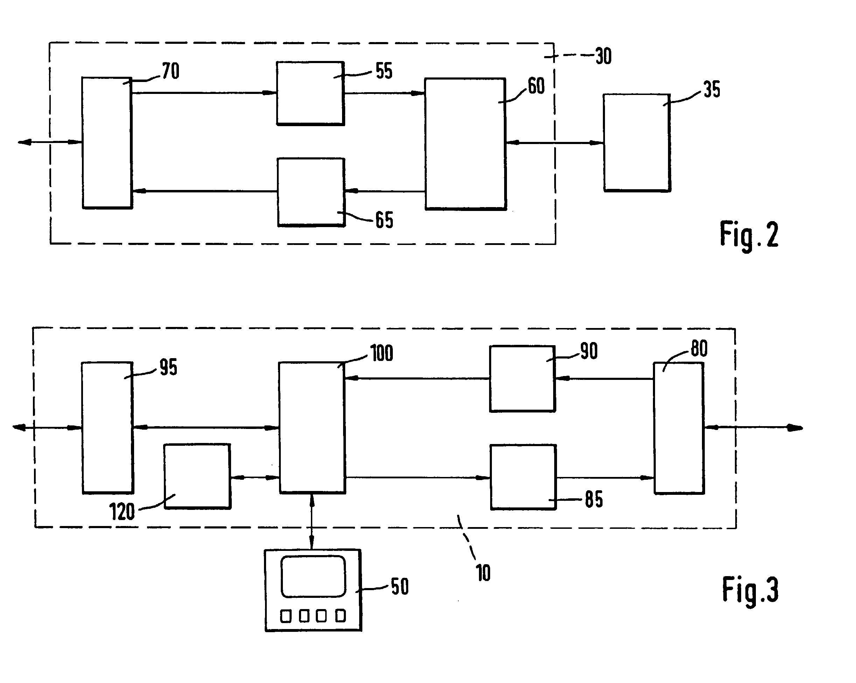

Figur 2 zeigt eine Ausführungsform der Datenverarbeitungseinrichtung 30. Dabei umfaßt die Datenverarbeitungseinrichtung 30 eine Zugangssteuerung 70 zum Anschluß über ein Modem bzw. eine entsprechende Schnittstelle an das Fernsprechnetz 25. Die Zugangssteuerung 70 ist mit einer Empfangseinheit 55 und einer Sendeeinheit 65 verbunden, die wiederum an eine Auswerteeinheit 60 angeschlossen sind. Die Empfangseinheit 55, die Sendeeinheit 65 und die Auswerteeinheit 60 gehören ebenfalls zur Datenverarbeitungseinrichtung 30. An die Auswerteeinheit 60 ist die Datenbank 35 angeschlossen.

Die Empfangseinheit 55 dient zum Empfang von Kennungen elektrischer Geräte 1 aus dem Fernsprechnetz 25. In der Auswerteeinheit 60 findet die Auswertung der Kennungen und die Steuerung des Datenaustausches über das Fernsprechnetz 25 statt. Die Sendeeinheit 65 dient zum Aussenden von Betriebsdaten über das Fernsprechnetz 25 an die Zentrale 10 für die Steuerung der elektrischen Geräte 1 durch die Zentrale 10.

In Figur 3 ist eine Ausführungsform der Zentrale 10 dargestellt. Die Zentrale 10 umfaßt eine Buslogik 95, eine mit der Buslogik 95 verbundene Auswerteeinheit 100, eine an die Auswerteeinheit 100 angeschlossene Speichereinheit 120, eine an die Auswerteeinheit 100 angeschlossene Empfangseinrichtung 90, eine an die Auswerteeinheit 100 angeschlossene Sendeeinheit 85 und eine mit der Empfangseinrichtung 90 und der Sendeeinheit 85 verbundene Zugangssteuerung 80. Die Bedieneinheit 50 ist gemäß der Ausführungsform nach Figur 1 mit der Auswerteeinheit 100 verbunden. Die Zugangssteuerung 80 dient zum Anschluß der Zentrale 10 über ein Modem oder eine entsprechende Schnittstelle an das Fernsprechnetz 25. Die Empfangseinrichtuntg 90 dient zum Empfang von Betriebsdaten von der Datenverarbeitungseinrichtung 30 für die Steuerung der elektrischen Geräte 1. Die Betriebsdaten, die auch Betriebsprogramme und Bedienungshinweise enthalten können, werden in der Speichereinheit 120 abgelegt. Die Sendeeinheit 85 dient zum Aussenden von Kennungen der elektrischen Geräte 1 über das Fernsprechnetz 25 an die Datenverarbeitungseinrichtung 30. In der Auswerteeinheit 100 findet die Auswertung der Betriebsdaten zur Steuerung der elektrischen Geräte 1, die Steuerung des Verbindungsaufbaues zur Übertragung von Kennungen an die Datenverarbeitungseinrichtung 30, die Auswertung von über die Bedieneinheit 50 eingegebenen Steuerbefehlen und die Steuerung einer Anzeige der Bedieneinheit 50 statt. Über die Buslogik 95 ist die Ansteuerung der Busleitung 5 durch die Zentrale 10 zum Zwecke eines Datenaustausches mit an die Busleitung 5 angeschlossenen Teilnehmern möglich.

Im Datenspeicher 40 des elektrischen Gerätes 1 gemäß Figur 1 oder Figur 4 ist eine Kennung des elektrischen Gerätes 1 sowie die Telefonnummer der Datenverarbeitungseinrichtung 30, die beispielsweise beim für das elektrische Gerät 1 zuständigen Kundendienst untergebracht ist, abgespeichert. Die Kennung des elektrischen Gerätes 1 setzt sich dabei vorteilhafterweise aus der Typen- und Seriennummer des elektrischen Gerätes 1 zusammen, womit das elektrische Gerät 1 eindeutig identifizierbar ist. Die Ansteuerung des Haus-Busses seitens des elektrischen Gerätes 1 findet durch die Buslogik 75 des elektrischen Gerätes 1 statt. Dadurch werden von der Zentrale 10 für das elektrische Gerät 1 über die Busleitung 5 ausgesandte Datentelegramme, die Steuerbefehle enthalten können, von der Busleitung 5 über den ersten Buskoppler 15 entnommen und an eine nicht dargestellte Steuerung des elektrischen Gerätes 1 weitergereicht. Andererseits wird nach Anschluß des elektrischen Gerätes 1 über den ersten Buskoppler 15 an die Busleitung 5 ein Datentelegramm, das die Kennung und die Telefonnummer des Kundendienstes enthält, über den ersten Buskoppler 15 vom elektrischen Gerät 1 auf die Busleitung 5 und von dort über den zweiten Buskoppler 20 zur Zentrale 10 übertragen.

Über die Buslogik 95 der Zentrale 10 wird das Datentelegramm an die Auswerteeinheit 100 weitergeleitet.

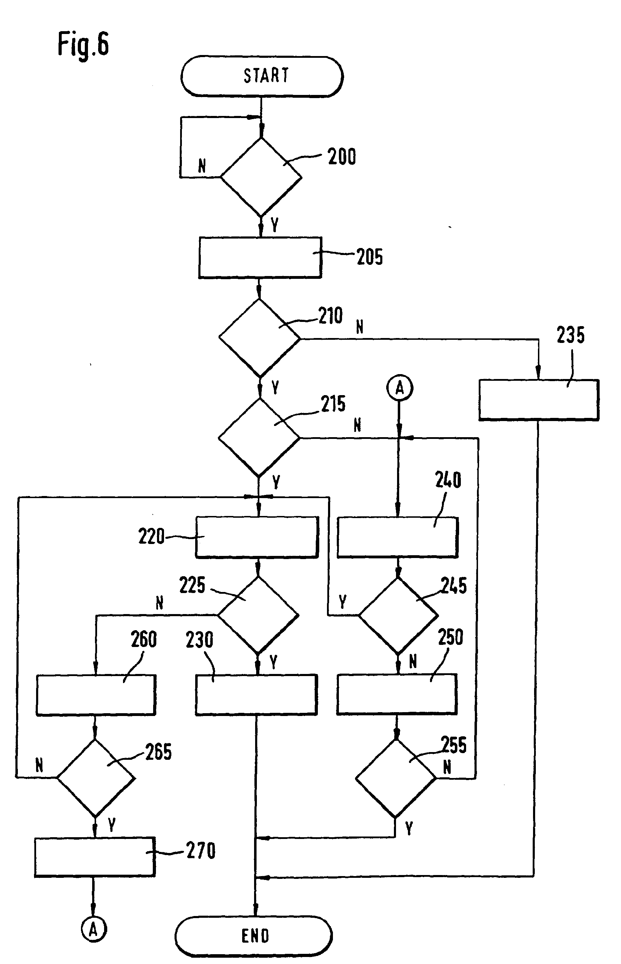

Die Steuerung der Übertragung des Datentelegramms über das Fernsprechnetz 25 an die Datenverarbeitungseinrichtung 30 kann beispielsweise nach dem in Figur 6 dargestellten Ablaufplan in der Auswerteeinheit 100 erfolgen. Bei Programmpunkt 200 findet eine Abfrage statt, ob ein Datenempfang über die Buslogik 95 der Zentrale 10 vorliegt. Diese Abfrage wird periodisch wiederholt, solange dies nicht der Fall ist. Werden jedoch Daten empfangen, so findet bei Programmpunkt 205 eine Identifikation des aussendenden elektrischen Gerätes 1, beispielsweise durch Auswertung eines entsprechenden, mit dem Datentelegramm verschickten Protokolls, das die Adresse des elektrischen Gerätes enthält, statt. Bei Programmpunkt 210 wird untersucht, ob das Datentelegramm eine Kennung enthält. Ist dies der Fall, so wird zu Programmpunkt 215 verzweigt, andernfalls zu Programmpunkt 235. Beim Programmpunkt 215 wird die Kennung beispielsweise in der Speichereinheit 120 zwischengespeichert und untersucht, ob das Datentelegramm eine Telefonnummer enthält. Ist dies der Fall, so wird zu Programmpunkt 220 verzweigt, andernfalls zu Programmpunkt 240. Bei Programmpunkt 220 kann der Benutzer ggf. durch Anzeige bzw. Signalisierung der Bedieneinheit 50 zur Quittierung aufgefordert werden, andernfalls erfolgt automatisch eine Anweisung an die Sendeeinheit 85 zur Anwahl des entsprechenden Kundendienstes unter Verwendung der Telefonnummer. Bei Programmpunkt 225 wird abgefragt, ob der Verbindungsaufbau erfolgreich war. Ist dies der Fall, so wird zu Programmpunkt 230 verzweigt, andernfalls zu Programmpunkt 260. Bei Programmpunkt 230 wird die Sendeeinheit 85 angewiesen, die Kennung auszusenden. Zur Sicherheit, daß die Kennung auch tatsächlich bei der Datenverarbeitungseinrichtung 30 angekommen ist, kann von der Datenverarbeitungseinrichtung 30 ein Quittierungssignal an die Zentrale 10 übermittelt und das Ergebnis über die Bedieneinheit 50 dem Benutzer angezeigt werden. Die dazu erforderlichen Programmschritte sind nicht in den Ablaufplan nach Figur 6 eingetragen. Bei Programmpunkt 235 werden die von der Buslogik 95 der Zentrale 10 empfangenen Daten identifiziert und entsprechend weiterbearbeitet. Dabei handelt es sich entweder um fehlerhaften Kennungsdatenempfang oder um Daten, die nicht der Aussendung von Kennungen dienen, sondern für den Ablauf der Gerätesteuerung. Bei fehlerhaftem Kennungsdatenempfang kann das elektrische Gerät 1 zur wiederholten Kennungsaussendung von der Zentrale 10 aufgefordert oder der Fehler zur Anzeige an der Bedieneinheit 50 gebracht werden. Im letztgenannten Fall ist das elektrische Gerät 1 gegebenenfalls nochmals vom Benutzer an die Busleitung 5 anzuschließen. Bei Programmpunkt 240 wird dem Benutzer über die Bedieneinheit 50 mitgeteilt, daß keine Telefonnummer im Datentelegramm enthalten ist und er deshalb selbst eine Telefonnummer einzugeben hat. Bei Programmpunkt 245 wird geprüft, ob eine Telefonnummer an der Bedieneinheit 50 eingegeben wurde. Ist dies der Fall, so wird zu Programmpunkt 220 verzweigt, andernfalls zu Programmpunkt 250. Bei Programmpunkt 250 wird der Benutzer durch Anzeige an der Bedieneinheit 50 gefragt, ob er einen Abbruch des Vorgangs wünscht. Die Antwort des Benutzers wird bei Programmpunkt 255 abgefragt. Ein Abbruch erfolgt, wenn der Benutzer dies wünscht oder keine Eingabe an der Bedieneinheit 50 erfolgt. Andernfalls wird wieder zu Programmpunkt 240 verzweigt. Bei Programmpunkt 260 wird ein Zähler inkrementiert. Der Zählerstand wird bei Programmpunkt 265 abgefragt. Erreicht er einen vorgegebenen Wert, so wird zu Programmpunkt 270 verzweigt, andernfalls zu Programmpunkt 220. Auf diese Weise wird eine automatische Wahlwiederholung bewirkt, die so lange durchgeführt wird, bis der vorgegebene Zählerstand erreicht ist. In diesem Fall wird dann bei Programmpunkt 270 eine Fehlermeldung an die Bedieneinheit 50 weitergeleitet und dort dem Benutzer angezeigt, der dann zur Eingabe der Telefonnummer gemäß Programmpunkt 240 aufgefordert wird und, wie bereits beschrieben, auch die Möglichkeit zum Abbruch des Vorgangs hat.

Die von der Zentrale 10 über die Zugangssteuerung 80 an das Fernsprechnetz 25 abgegebene Kennung des elektrischen Gerätes 1 wird in der Datenverarbeitungseinrichtung 30 über die Zugangssteuerung 70 an die Empfangseinheit 55 weitergeleitet und von dort der Auswerteeinheit 60 zur Auswertung zugeführt.

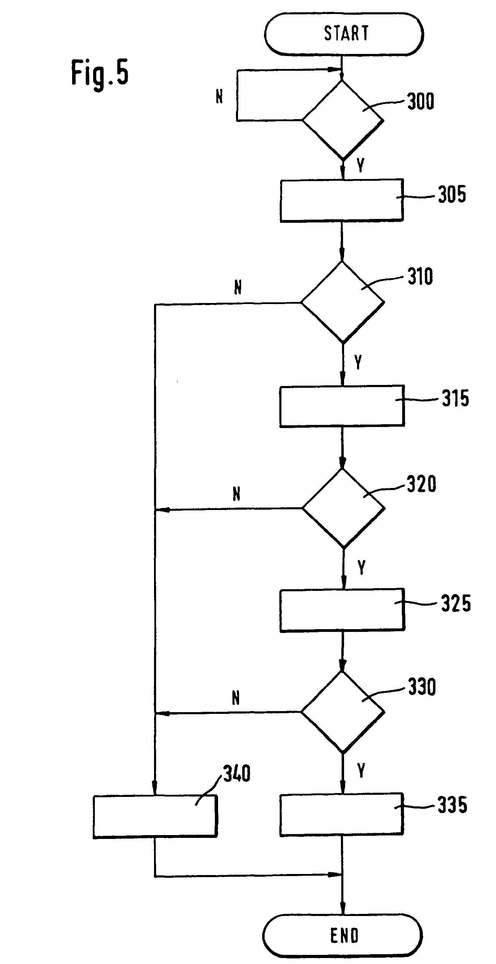

In Figur 5 ist ein Ablaufplan zur Auswertung der Kennungen in der Auswerteeinheit 60 der Datenverarbeitungseinrichtung 30 dargestellt. Bei Programmpunkt 300 wird abgefragt, ob Daten über die Empfangseinheit 55 empfangen wurden. Ist dies nicht der Fall, so wird die Abfrage periodisch wiederholt. Andernfalls wird die aussendende Zentrale 10 bei Programmpunkt 305 beispielsweise durch Auswertung eines den übertragenen Daten beigefügten Protokolls, das die Adresse der Zentrale 10 enthält, identifiziert. Bei Programmpunkt 310 wird geprüft, ob die empfangenen Daten eine Kennung eines elektrischen Gerätes 1 enthalten. Ist dies der Fall, so wird zu Programmpunkt 315 verzweigt, andernfalls zu Programmpunkt 340. In Programmpunkt 315 findet ein Vergleich der in der Kennung enthaltenen Typennummer mit in der Datenbank 35 gespeicherten Typennummern statt. Bei Programmpunkt 320 wird gefragt, ob die in der Kennung enthaltene Typennummer in der Datenbank 35 enthalten ist. Ist dies der Fall, so wird zu Programmpunkt 325 verzweigt, andernfalls zu Programmpunkt 340. Bei Programmpunkt 325 findet ein Vergleich der in der Kennung enthaltenen Seriennummer mit in der Datenbank 35 gespeicherten und zur bereits ermittelten Typennummer gehörenden Seriennummern statt. Bei Programmpunkt 330 wird gefragt, ob die in der Kennung enthaltene Seriennummer in der Datenbank 35 gespeichert ist. Ist dies der Fall, so wird zu Programmpunkt 335 verzweigt, andernfalls zu Programmpunkt 340. Bei Programmpunkt 335 werden die zu dem durch die in der Kennung enthaltene Typen- und Seriennummer gekennzeichneten elektrischen Gerät 1 gehörigen Betriebsdaten an die Sendeeinheit 65 weitergeleitet und die Sendeeinheit 65 zur Übermittlung der genannten Daten an die Zentrale 10 angewiesen. Bei Programmpunkt 340 wird eine Fehlermeldung generiert und die Sendeeinheit 65 zur Übermittlung der Fehlermeldung an die Zentrale 10 angewiesen. Im Falle eines Fehlers muß der Kennungsvorgang erneut gestartet werden, indem beispielsweise das elektrische Gerät 1 von der Busleitung 5 entfernt und nochmals an diese angeschlossen wird oder bei vorsorglich in der Speichereinheit 120 der Zentrale 10 zwischengespeicherter Kennung eine erneute Übertragung der Kennung an die Datenverarbeitungseinrichtung 30 von der Zentrale 10 in Gang gesetzt wird. Andernfalls muß dem Kundendienst die Typen- und Seriennummer auf anderem Wege, beispielsweise telefonisch oder durch Fax, mitgeteilt werden, so daß die entsprechenden Betriebsdaten an die Zentrale 10 übermittelt werden können.

Es ist auch möglich, daß Betriebsdaten von der Datenverarbeitungseinrichtung 30 ohne vorherige Kennungsübermittlung seitens der Zentrale 10 und ohne vorherige Aufforderung seitens des Benutzers an die Zentrale 10 übermittelt werden. Dies kann beispielsweise dann von Vorteil sein, wenn Änderungen der zum Betrieb des elektrischen Gerätes 1 erforderlichen Daten erfolgen. Auf diese Weise wird die Zentrale 10 stets mit den aktuellsten Betriebsdaten versorgt. Dies ist auch dann gewährleistet, wenn eine entsprechende periodische Abfrage von der Zentrale 10 an die Datenverarbeitungseinrichtung 30 erfolgt. Schließlich ist es auch denkbar, wenn auch weniger komfortabel, daß der Benutzer selbst beim Kundendienst nachfragt, ob Änderungen aufgetreten sind und der Kundendienst daraufhin die geänderten Daten über die Datenverarbeitungseinrichtung 30 an die Zentrale 10 übermittelt. Änderungen können vom Benutzer auch über die Bedieneinheit 50 und die Zentrale 10 von der Datenverarbeitungseinrichtung 30 abgerufen werden.

Zur Übertragung der Daten von der Datenverarbeitungseinrichtung 30 an die Zentrale 10 ist es erforderlich, daß die Adresse bzw. Telefonnummer des jeweiligen Benutzers beim Kundendienst bekannt ist und beispielsweise in der Datenbank 35 gespeichert ist. Nur so lassen sich Betriebsdaten von der Datenverarbeitungseinrichtung 30 an die Zentrale 10 automatisch übertragen.

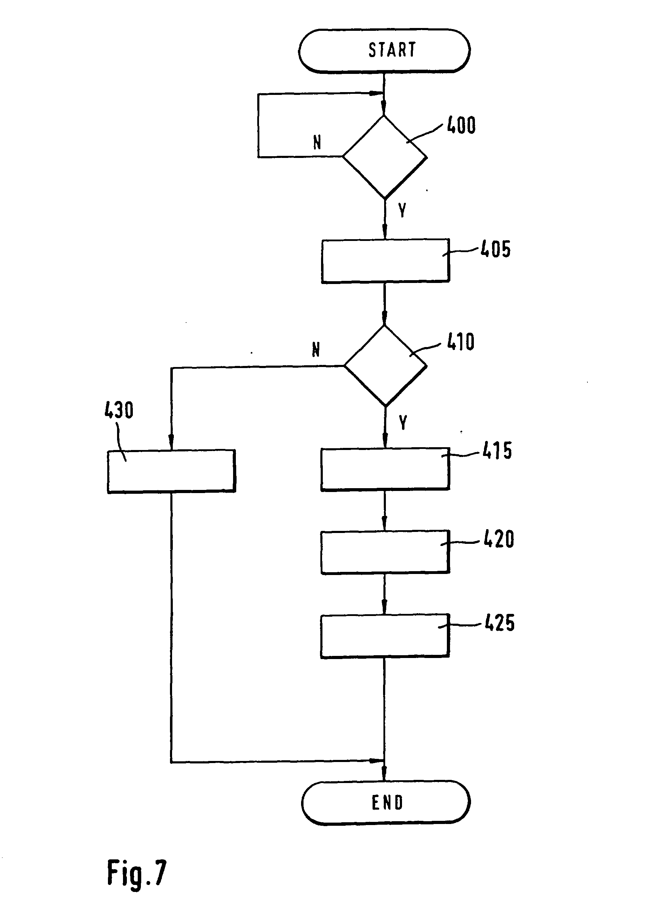

In Figur 7 ist ein Ablaufplan dargestellt, nach dem beispielsweise die von der Datenverarbeitungseinrichtung 30 an die Zentrale 10 übermittelten Betriebsdaten für das elektrische Gerät 1 in der Auswerteeinheit 100 der Zentrale 10 weiterverarbeitet werden können. Bei Programmpunkt 400 wird abgefragt, ob Daten über die Empfangseinrichtung 90 empfangen wurden. Ist dies nicht der Fall, so wird die Abfrage periodisch wiederholt. Andernfalls wird bei Programmpunkt 405 die aussendende Datenverarbeitungseinrichtung 30 beispielsweise durch ein mit den Betriebsdaten übertragenes Protokoll, das die Adresse der Datenverarbeitungseinrichtung 30 enthält, identifiziert. Die gegenseitige Identifizierung der Teilnehmer ist vor allem für eine eventuelle Übertragung von Quittierungssignalen oder Rückfragesignalen erforderlich. Bei Programmpunkt 410 wird geprüft, ob die empfangenen Daten Betriebsdaten für ein elektrisches Gerät 1 enthalten. Ist dies der Fall, so wird zu Programmpunkt 415 verzweigt, andernfalls zu Programmpunkt 430. Bei Programmpunkt 415 findet eine Identifizierung des elektrischen Gerätes statt, zu dem die empfangenen Betriebsdaten gehören. Dies kann beispielsweise dadurch geschehen, daß die Betriebsdaten die Typen- und Seriennummer des elektrischen Gerätes 1 enthalten, daß die nach Anschluß des elektrischen Gerätes 1 an die Busleitung 5 ausgesandte Kennung vor Übertragung an die Datenverarbeitungseinrichtung 30 in der Speichereinheit 120 der Zentrale 10 zusammen mit der Adresse des elektrischen Gerätes 1 und in fester Zuordnung zu dieser Adresse abgespeichert wurde, daß ein Vergleich der mit den Betriebsdaten übertragenen Kennung und der in der Speichereinheit 120 der Zentrale 10 gespeicherten Kennungen stattfindet und über die Zuordnung zur Adresse des jeweiligen elektrischen Gerätes eine Identifizierung des elektrischen Gerätes ermöglicht wird. Bei Programmpunkt 420 werden die von der Datenverarbeitungseinrichtung 30 übermittelten Betriebsdaten in der Speichereinheit 120 gespeichert. Bei Programmpunkt 425 findet eine Neukonfigurierung des Steuerprogramms zur Einbindung des neu angeschlossenen elektrischen Gerätes 1 statt. Eine solche Neukonfigurierung erfolgt auch bei dem Empfang von geänderten Betriebsdaten für das elektrische Gerät 1. Bei Programmpunkt 430 wird die Sendeeinheit 85 der Zentrale 10 angewiesen, eine Rückfrage an die Datenverarbeitungseinrichtung 30 zu übertragen, um beispielsweise bei einer gestörten Übertragung eine Wiederholung der Datenübertragung seitens der Datenverarbeitungseinrichtung 30 anzufordern.

## Patentansprüche

1. Verfahren zur Übertragung von Kennungen nach Anschluß eines elektrischen Gerätes (1) an eine Busleitung (5), die mehrere elektrische Geräte und mindestens eine Zentrale (10) miteinander verbindet, **dadurch gekennzeichnet, daß** eine das elektrische Gerät (1) eindeutig identifizierbare Kennung vom elektrischen Gerät (1) über einen ersten Buskoppler (15) auf die Busleitung (5) und von dort über einen zweiten Buskoppler (20) zur Zentrale (10) übertragen wird, daß die Zentrale (10) die Kennung an ein Fernsprechnetz (25) aussendet und die Kennung von dort an eine Datenverarbeitungseinrichtung (30) weitergeleitet wird, die mit einer Datenbank (35) verbunden ist, daß die Kennung in der Datenverarbeitungseinrichtung (30) mit in der Datenbank (35) abgelegten Daten verglichen wird und
- daß in Abhängigkeit der Kennung Betriebsdaten aus der Datenbank (35) ausgelesen und von der Datenverarbeitungseinrichtung (30) über das Fernsprechnetz (25) an die Zentrale (10) übertragen werden, oder
- daß in der Datenverarbeitungseinrichtung (30) eine Fehlermeldung generiert wird und die Fehlermeldung an die Zentrale (10) übermittelt wird.

2. Verfahren nach Anspruch 1, **dadurch gekennzeichnet, daß** als Kennung eine in einem Datenspeicher (40) des elektrischen Gerätes (1) abgespeicherte Typen- und Seriennummer des elektrischen Gerätes (1) an die Datenverarbeitungseinrichtung (30) übertragen wird.

3. Verfahren nach Anspruch 2, **dadurch gekennzeichnet, daß** eine im Datenspeicher (40) des elektrischen Gerätes (1) abgespeicherte Telefonnummer zur Anwahl der Datenverarbeitungseinrichtung (30) durch die Zentrale (10) verwendet wird.

4. Verfahren nach Anspruch 1, 2 oder 3, **dadurch gekennzeichnet, daß** die Anwahl der Datenverarbeitungseinrichtung (30) über eine mit der Zentrale (10) oder über einen dritten Buskoppler (45) mit der Busleitung (5) verbundene Bedieneinheit (50) durchgeführt wird.

5. Verfahren nach einem der vorherigen Ansprüche, **dadurch gekennzeichnet, daß** Änderungen der Betriebsdaten von der Datenverarbeitungseinrichtung (30) über das Fernsprechnetz (25) an die Zentrale (10) übertragen werden.

6. Datenverarbeitungseinrichtung (30), die an ein Fernsprechnetz (25) angeschlossen ist und zur Durchführung eines Verfahrens nach einem der vorherigen Ansprüche geeignet ist, **dadurch gekennzeichnet, daß** eine Empfangseinheit (55) zum Empfang von Kennungen, die elektrische Geräte (1) eindeutig identifizieren, vorhanden ist, daß die Empfangseinheit (55) mit einer Auswerteeinheit (60), an die eine Datenbank (35) angeschlossen ist und die zur Auswertung der Kennungen und zur Steuerung des Datenaustausches über das Fernsprechnetz (25) dient, verbunden ist, daß die Auswerteeinheit (60) außerdem mit einer Sendeeinheit (65) zum Aussenden von Betriebsdaten für die Steuerung der elektrischen Geräte (1) oder zur Übermittlung einer Fehlermeldung an die Zentrale (10) verbunden ist und daß die Empfangseinheit (55) und die Sendeeinheit (65) mit einer Zugangssteuerung (70) zum Anschluß an das Fernsprechnetz (25) verbunden sind.

7. Elektrisches Gerät (1), das über einen ersten Buskoppler (15) an eine Busleitung (5) angeschlossen ist und eine eindeutig identifizierbare Kennung über den ersten Buskoppler (15) auf die Busleitung (5) überträgt, **dadurch gekennzeichnet, daß** ein Datenspeicher (40) vorgesehen ist, daß der Datenspeicher (40) an den ersten Buskoppler (15) angeschlossen ist und daß die Busansteuerung des elektrischen Gerätes (1) durch eine ebenfalls an den ersten Buskoppler (15) angeschlossene Buslogik (75) erfolgt, wobei der Datenspeicher (40) die das elektrische Gerät (1) eindeutig identifizierbare Kennung enthält.

8. Elektrisches Gerät (1) nach Anspruch 7, **dadurch gekennzeichnet, daß** der Datenspeicher (40) eine Typen- und Seriennummer des elektrischen Gerätes (1) enthält.

9. Elektrisches Gerät (1) nach Anspruch 7 oder 8, **dadurch gekennzeichnet, daß** der Datenspeicher (40) eine Telefonnummer zur Anwahl einer an ein Fernsprechnetz (25) angeschlossenen Datenverarbeitungseinrichtung (30) enthält.

## Claims

1. Method for transmitting identifiers after an electrical device (1) has been connected to a bus line (5) which connects a plurality of electrical devices and at least one control centre (10) to one another, **characterized in that** an identifier which uniquely identifies the electrical device (1) is transmitted from the electrical device (1), via a first bus coupler (15), to the bus line (5) and is transmitted from there to the control centre (10) via a second bus coupler (20), **in that** the control centre (10) transmits the identifier to a telephone network (25) and the identifier is forwarded from there to a data processing device (30) which is connected to a database (35), **in that** the identifier is compared, in the data processing device (30), with data which are stored in the database (35), and
- **in that** operating data are read from the database (35) on the basis of the identifier and are transmitted from the data processing device (30) to the control centre (10) via the telephone network (25), or
- **in that** an error message is generated in the data processing device (30) and the error message is transmitted to the control centre (10).

2. Method according to Claim 1, **characterized in that** a type number and a serial number of the electrical device (1), which are stored in a data memory (40) of the electrical device (1), are transmitted to the data processing device (30) as an identifier.

3. Method according to Claim 2, **characterized in that** a telephone number which is stored in the data memory (40) of the electrical device (1) is used by the control centre (10) to select the data processing device (30).

4. Method according to Claim 1, 2 or 3, **characterized in that** the data processing device (30) is selected using a control unit (50) which is connected to the control centre (10) or is connected to the bus line (5) via a third bus coupler (45).

5. Method according to one of the preceding claims, **characterized in that** changes in the operating data are transmitted from the data processing device (30) to the control centre (10) via the telephone network (25).

6. Data processing device (30) which is connected to a telephone network (25) and is suitable for carrying out a method according to one of the preceding claims, **characterized in that** there is a receiving unit (55) for receiving identifiers which uniquely identify electrical devices (1), **in that** the receiving unit (55) is connected to an evaluation unit (60) which has a database (35) connected to it and is used to evaluate the identifiers and to control the interchange of data via the telephone network (25), **in that** the evaluation unit (60) is also connected to a transmitting unit (65) for transmitting operating data for the purpose of controlling the electrical devices (1) or for transmitting an error message to the control centre (10), and **in that** the receiving unit (55) and the transmitting unit (65) are connected to an access controller (70) for connection to the telephone network (25) .

7. Electrical device (1) which is connected to a bus line (5) via a first bus coupler (15) and transmits a uniquely identifiable identifier to the bus line (5) via the first bus coupler (15), **characterized in that** a data memory (40) is provided, **in that** the data memory (40) is connected to the first bus coupler (15), and **in that** bus control of the electrical device (1) is effected using a bus logic unit (75) which is likewise connected to the first bus coupler (15), the data memory (40) containing the identifier which uniquely identifies the electrical device (1).

8. Electrical device (1) according to Claim 7,
**characterized in that** the data memory (40) contains a type number and a serial number of the electrical device (1).

9. Electrical device (1) according to Claim 7 or 8, **characterized in that** the data memory (40) contains a telephone number for selecting a data processing device (30) which is connected to a telephone network (25).

## Revendications

1. Procédé de transmission de signaux d'identification après connexion d'un appareil électrique (1) à un bus (5) qui relie entre eux plusieurs appareils électriques et au moins un central (10),
**caractérisé en ce qu'**
un signal d'identification identifiant clairement l'appareil électrique (1) est transmis à partir de l'appareil électrique (1), par l'intermédiaire d'un premier coupleur de bus (15), vers le bus (5) et à partir de là, par l'intermédiaire d'un second coupleur de bus (20) vers le central (10),
le central (10) émet le signal d'identification vers un réseau téléphonique (25) et, à partir de là, le signal d'identification est transmis à une installation de traitement de données (30) reliée à une banque de données (35),
le signal d'identification est comparé, dans l'installation de traitement de données (30), à des données déposées dans la banque de données (35), et
- en fonction du signal d'identification, des données de fonctionnement sont extraites de la banque de données (35) et sont transmises à partir de l'installation de traitement de données (30), par l'intermédiaire du réseau téléphonique (25), au central (10), ou bien
- un signal d'erreur est généré dans l'installation de traitement de données (30), et ce signal d'erreur est transmis au central (10).

2. Procédé selon la revendication 1,
**caractérisé en ce que**
comme signal d'identification, un numéro de type et de série de l'appareil électrique (1), enregistré dans une mémoire de données (40) de l'appareil électrique (1), est transmis à l'installation de traitement de données (30).

3. Procédé selon la revendication 2,
**caractérisé en ce qu'**
un numéro de téléphone enregistré dans la mémoire de données (40) de l'appareil électrique (1) est utilisé pour la sélection de l'installation de traitement de données (30) par le central (10).

4. Procédé selon la revendication 1, 2 ou 3,
**caractérisé en ce que**
la sélection de l'installation de traitement de données (30) est effectuée par l'intermédiaire d'une unité de manoeuvre (50) reliée au central (10) ou, par l'intermédiaire d'un troisième coupleur de bus (45), au bus (5).

5. Procédé selon l'une des revendications précédentes,
**caractérisé en ce que**
des modifications des données de fonctionnement sont transmises à partir de l'installation de traitement de données (30), par l'intermédiaire du réseau téléphonique (25), au central (10).

6. Installation de traitement de données (30) connectée à un réseau téléphonique (25) et apte à exécuter un procédé selon l'une des revendications précédentes,
**caractérisée en ce qu'**
une unité de réception (55) est présente pour recevoir des signaux d'identification qui identifient clairement les appareils électriques (1),
l'unité de réception (55) est reliée à une unité d'exploitation (60) connectée à une banque de données (35) et qui sert à l'exploitation des signaux d'identification et à la commande de l'échange de données par l'intermédiaire du réseau téléphonique (25),
l'unité d'exploitation (60) est en outre reliée à une unité d'émission (65) servant à émettre des données de fonctionnement pour la commande des appareils électriques (1) ou à transmettre un signal d'erreur au central (10), et
l'unité de réception (55) et l'unité d'émission (65) sont reliées à une commande d'accès (70) pour le raccordement au réseau téléphonique (25).

7. Appareil électrique (1) relié à un bus (5) par l'intermédiaire d'un premier coupleur de bus (15) et qui transmet un signal d'identification clairement identifiable au bus (5) par l'intermédiaire du premier coupleur de bus (15),
**caractérisé en ce qu'**
une mémoire de données (40) est connectée au premier coupleur de bus (15), et
la commande de bus de l'appareil électrique (1) s'effectue au moyen d'une logique de bus (75) également connectée au premier coupleur de bus (15), la mémoire de données (40) contenant le signal d'identification identifiant clairement l'appareil électrique (1).

8. Appareil électrique (1) selon la revendication 7,
**caractérisé en ce que**
la mémoire de données (40) contient un numéro de type et de série de l'appareil électrique (1).

9. Appareil électrique (1) selon la revendication 7 ou 8,
**caractérisé en ce que**
la mémoire de données (40) contient un numéro de téléphone pour la sélection d'une installation de traitement de données (30) connectée à un réseau téléphonique (25).
